Europäisches Patentamt

European Patent Office

Office européen des brevets

(11) Publication number: **0 078 182**
A2

(12) **EUROPEAN PATENT APPLICATION**

(21) Application number: 82305718.7

(22) Date of filing: 27.10.82

(51) Int. Cl.³: **A 21 D 8/04**
**A 21 D 6/00**

(30) Priority: 28.10.81 JP 172439/81

(43) Date of publication of application:
04.05.83 Bulletin 83/18

(84) Designated Contracting States:
DE FR GB

(71) Applicant: KYOWA HAKKO KOGYO KABUSHIKI
KAISHA
6-1, Ohte-machi 1-chome
Chiyoda-ku Tokyo-to(JP)

(72) Inventor: Masanobu, Kawai
32-15, Mori-dai 3-chome
Atsugi-shi Kanagawa-ken(JP)

(72) Inventor: Uno, Kazuo
3-9-9, Naka-machi
Machida-shi Tokyo-to(JP)

(74) Representative: Watkins, Arnold Jack et al,
European Patent Attorney Frank B. Dehn & Co. Imperial
House 15-19 Kingsway
London WC2B 6UZ(GB)

(54) Doughs comprising alcohol-resistant yeasts.

(57) Doughs for the preparation of bread and other farinaceous products, comprising alcohol-resistant yeasts, possess a high fermenting activity even after freezing and may be used to prepare bread and other farinaceous products of high quality without the need for supplemental additives. Doughs comprising alcohol-resistant yeasts of the genus *Saccharomyces* for example yeasts selected from *Saccharomyces cerevisiae* and Saccharomyces chevalieri are preferred.

EP 0 078 182 A2

## Doughs comprising alcohol-resistant yeasts

The present invention relates to doughs comprising alcohol-resistant yeasts and to the use of such doughs for preparing farinaceous products such as for example bread.

.The use of frozen doughs in the preparation of farinaceous products such as bread is continuously increasing in many countries of the world as a result of the advantages which may be obtained by the use of such doughs such as, for example, the supply of fresher bread to consumers and the introduction of simpler methods for preparing bread. However, when conventional baker's yeasts, which are not resistant to freezing conditions, are used for the preparation of frozen dough, the fermenting activity of the defrosted dough is liable to decrease significantly. In order to overcome such disadvantages attemps have been made to improve the properties of the frozen dough obtained by for example controlling the operating conditions e.g. by conducting the fermentation for a shorter time than conventional or by, for example, adding a protecting agent to the raw materials used for preparing the frozen dough, or by adding a supplemental yeast to the dough. Thus, for example, sugars, skim milk powders, amino acids, sugar esters, methyl cellulose and the like may be added to lead dough for the preparation of breakfast bread e.g. for toasting. It is not easy, however, to substantially improve the freeze-resistant properties of doughs by the use of such additives and furthermore the incorporation of such additives in dough involves complicated processes.

The present invention overcomes, at least in part, the above-mentioned disadvantages by providing a dough comprising a yeast having a fermenting activity which is preferably relatively high, which activity is not substantially reduced by freezing.

The present invention is based upon the discovery that alcohol-resistant yeasts as described hereinafter are resistant to freezing conditions and thus such yeasts are of interest for use in the preparation of so-called freeze-resistant doughs. It has also been found that these alcohol-resistant yeasts may be used for the preparation of both rich and lean doughs, and other farinaceous products, the preparation being conventional, there being no need for any supplemental additives. Moreover such doughs may be used to prepare bread and other farinaceous products of a high quality.

Thus according to one feature of the present invention there is provided a freeze-resistant dough for the preparation of bread and other farinaceous products characterized in that said dough comprises an alcohol-resistant yeast.

The term "freeze-resistant" as used herein in relation to a dough means a dough containing a yeast the fermenting activity of which is not substantially reduced by freezing.

Advantageously doughs of the present invention contain a yeast having an alcohol-resistance of at least 5.0 measured according to the method of Inoue et al ["Seishu-kobo no kenkyu" (Study of sake yeasts), page 7, published by Seishu-kobo Kenkyukai, Japan (Research Association of Sake yeasts) and Journal of Fermentation Technology, 40, (10), 511-521 (1962)].

An alcohol-resistance of more than 4.0 (measured according to the method of Inoue et al) is preferred.

Alcohol-resistant yeasts which may be used according to the present invention are preferably selected from the genus Saccharomyces for example alcohol-resistant yeasts of the genus Saccharomyces which may be used for alcohol fermentation in the brewing industry such as for example, yeasts selected from Saccharomyces cerevisiae and Saccharomyces chevalieri. Preferred examples of such yeasts, which may be used for the purposes of the present invention include Saccharomyces cerevisiae A-055, A-077, A-088 (FERM-P No. 6191), A-090, A-109, S. cerevisiae var. ellipsoideus A-030 (FERM-P No. 6189), S. chevalieri A-080 (FERM-P No. 6190) and the like. It will be appreciated that the above-mentioned specifically named yeasts are listed merely by way of preferred examples and any other alcohol-resistant yeast may be employed according to the present invention The yeast specifically listed herein are all known and readily available, Saccharomyces cerevisiae A-088, Saccharomyces cerevisiae var. ellipsoideus A-030 and Saccharomyces chevalieri A-080 in particular having been deposited with the Fermentation Institute (Bikoken) under the numbers FERM-P 6191, 6189 and 6190 respectively.

The term "alcohol-resistance" has been defined as "the growth ability of yeast in the presence of alcohol" [Troyer et al: Mycologia, 45, 20 (1953)]. As described above the tests for alcohol-resistance were carried out according to the method of Inoue et al ["Seishu-kobo no kenkyu" (Study of Sake yeasts), page 7; published by Seishu-kobo Kenkyukai, Japan (Research Association of Sake yeasts) and Journal of Fermentation Technology , 40, (10), 511-521 (1962)] to obtain the results shown in Table 1, from which it is apparent that the yeasts selected as freeze-resistant yeasts according to the present invention are resistant to relatively high concentrations of alcohol.

The alcohol resistance of yeasts was determined in the following manner:-

Alcohol-resistance test:

On each occasion, the yeast was cultured by using a medium having the following composition:

Glucose (5 g), magnesium sulfate (0.05 g), potassium phosphate (0.2 g), ammonium sulfate (0. 25 g), calcium chloride (0.01 g), manganese sulfate (0·1 mg), ferric chloride (0.05 mg), vitamin $B_1$ (0.1 mg), vitamin $B_6$ (0.1 mg), calcium pantothenate (0.1 mg), niacin (0.1 mg), vitamin $B_2$ (0.01 mg), inositol (2 mg), biotin (0.5 μg), para-aminobenzoic acid (0.05 mg), casamino acid (0.1 g; adjusted to a pH of 4.5 with NaOH) and deionized water (100 ml) [pH: 5.7].

The medium (89 ml) was placed in a conical flask (300 ml), autoclaved at 120°C for 15 minutes, cooled to ambient temperature and treated with ethanol (11 ml). The medium was inoculated with one platinum loopful of yeast and the inoculated medium cultured at 30°C for 10 days. Before inoculation, the yeast had been cultured at 26°C for one day using a complete medium comprising glucose (20 g/l), yeast extract (10 g/l), polypeptone (20 g/l) and agar (15 g/l) [pH: 5.7].

In Table 1, the alcohol-resistance is indicated by the revival ratio of the yeast after completion of the fermentation.

- 5 -

## TABLE 1

Alcohol-resistance of yeasts

| Selected alcohol-resistant yeasts | | | $OD_{10}/OD_0$* |
|---|---|---|---|
| Saccharomyces cerevisiae | A-055 | | 5.3 |
| | A-077 | | 5.7 |
| | A-088 | (FERM-P 6191) | 5.1 |
| | A-090 | | 5.3 |
| | A-109 | | 6.4 |
| S. cerevisiae var. ellipsoideus | | | |
| | A-030 | (FERM-P 6189) | 6.2 |
| S. chevalieri | A-080 | (FERM-P 6190) | 5.1 |
| Usual baker's yeast | | | |
| S. cerevisiae | A-081 | | 2.2 |
| | A-082 | | 2.2 |

*$OD_{10}$ denotes the optical density at 660 mμ of a cultured liquor obtained by culturing the yeast in a medium containing 11% alcohol at 30°C for 10 days without shaking and aeration, and $OD_0$ denotes the corresponding optical density at the beginning of the fermentation. A value of $OD_{10}/OD_0$ of more than 5.0 was evaluated as representing a positive alcohol-resistance.

Any convenient culture medium, synthetic or organic, which contains suitable amounts of an assimilable carbon source, nitrogen source, inorganic substances and other substances required for the growth of the alcohol-resistant yeasts may be used for culturing the yeasts here concerned. It is advantageous for mass production to use various methods using sugars (e.g. using molasses), as are conventionally used for culturing known baker's yeasts.

The doughs containing the alcohol-resistant yeasts of the present invention may be prepared in a similar manner to that used for the preparation of doughs containing conventional baker's yeast and may be used for the preparation of various lean or rich breads and other farinaceous products which are preferably stored in the frozen state.

The farinaceous products of the present invention may be used in conventional manner, and thus may be baked after purchase, if necessary after defrosting.

The alcohol-resistant yeast of the present invention may for example be added to the wheat flour conveniently in an amount of from 1 to 4% (w/w).

In so far as the other ingredients are concerned any convenient type or amount of such ingredients may be used depending on the desired product. It is also possible, if desired, to add to the dough suitable additives which do not affect the activity of the yeast. Thus, for example, the dough for the preparation of breads may contain wheat flour, sugar, table salt, shortening, yeast food, water and the like.

When the dough of the present invention is frozen and the defrosted dough is used for the preparation of bread, the outlook, crumb structure, flavour and taste of the bread thus-prepared are superior to those of the control breads prepared using conventional frozen doughs with conventional baker's yeast.

The following non-limiting Examples illustrate the invention.

Example 1

_Saccharomyces cerevisiae_ A-088 (FERM-P 6191) was used as the yeast and was cultured in a 5 litre jar fermentor in the following manner:-

Seed culture:

(1) Medium:

Glucose 10 g/dl, yeast extract 1.0 g/dl, polypeptone 2.0 g/dl, pH 6.0

(2) Culturing conditions:

Stationary culture at 30°C for 24 hours.

Inoculum: one platinum loopful yeast

Amount of the medium used in each step:

First seed: 10 ml (30 ml test tube)

Second seed: 500 ml (1 litre Sakaguchi flask)

Third seed: 2500 ml (3 litre Sakaguchi flask)

Main culture:

(1) Medium:

Molasses (10 g/dl as glucose), ammonium sulfate (0.76 g/dl), urea (0.34 g/dl), ammonium phosphate, monobasic (0.11 g/dl)

pH:      5.0

(2) Amount of the medium:

2.0 and 3.0 litres in a 5 litre jar fermentor (the volumes quoted being those at the beginning and after completion of the fermentation respectively)

(3) Culturing conditions:

30°C, 16 hours, aeration of 4.0 litre/minute.

During the fermentation sugar streams were fed to the medium at intervals of 60 minutes.

After completion of the fermentation, the yeast was dehydrated and pressed.   Bread samples were prepared

- 8 -

in a conventional manner. The steps involved in preparing the samples of bread were as follows:-

Raw materials → mixing (30°C) → sponge fermentation (30°C, 90 min.) → main mixing· → floor time (20 min.) → dividing ·→· rounding ——(20°C, 15 min.) bench time → fermentation → moulding → freezing (-18°C) → preservation (30 days) → defrosting (30°C 60 min. in an incubator) → final proofing → baking (210°C, 23· min).

The ingredients of various samples are shown in Table 2.

## TABLE 2

| Ingredients· | Test sample | | Control sample | |
| --- | --- | --- | --- | --- |
| | Sponge mixing | Dough mixing | Sponge mixing | Dough mixing |
| Wheat flour | 700g (70%) | 300g (30%)· | 700g (70%) | 300g (30%) |
| Sugar | − | 50 (5%) | − | 50 (5%) |
| Table salt | − | 20 (2%) | | 20 (2%) |
| Shortening | − | 50 (5%) | − | 50 (5%) |
| Yeast | − | − | 20 (2%) | −. |
| Yeast food | 1 (0.1%) | .− | 1 (0.1%) | − |
| Water | 430 (43%) | 250 (25%) | 430 (43%) | 250 (25%) |
| Freeze-resistant yeast | 20 (2%) | − | − | − |

Note:- The relative proportions of the ingredients other than wheat flour are indicated by the ·percentages in parentheses, these percentages being based on the total amount of wheat flour present representing 100%

The following Table 3 indicates the specific volume of each bread sample and the period of time for which each bread sample can be preserved.

TABLE 3

| Yeast | Preserved at -18°C for (weeks) | | | | | |
|---|---|---|---|---|---|---|
| | 1D* | 2 | 4 | 6 | 9 | 12 |
| Saccharomyces cerevisiae A-088 (test sample) | 5.5 | 5.4 | 5.4 | 5.4 | 5.4 | 5.4 |
| Control yeast (commercial baker's yeast) | 4.8 | 4.6 | 4.5 | 4.5 | 4.4 | 3.8 |

Notes:- *1D = 1 day

The following Tables 4-6 indicate the quality and preservability of bread samples prepared using a dough comprising an alcohol-resistant yeast according to the present invention when compared with bread samples prepared using a commercial baker's yeast. The results shown in the following tables 4-6 were obtained using a test panel consisting of five experts and a dough without freezing or preserving was used as the reference dough. The result "good" denoted below denotes an approximately equivalent result to the reference dough obtained using a baker's yeast of commercial grade comprising Saccharomyces cerevisiae A-081 as active ingredient.

TABLE 4.

Outlook

| Yeast | After 1D | 2W | 9W | 12W |
|---|---|---|---|---|
| Test sample Saccharomyces cerevisiae A-088 | good | good | good | good |
| Control sample Commercial baker's yeast | no good | no good | good | good |

1D = 1 day    W = weeks

## TABLE 5

### Crumb Structure

| Yeast | After 1D | 2W | 9W | 12W |
|---|---|---|---|---|
| Test sample Saccharomyces cerevisiae A-088 | good | good | good | slightly coarse |
| Control sample Commercial baker's yeast | no good | no good | good | good |

1D = 1 day   W = weeks

## TABLE 6

### Flavour

| Yeast | After 1D | 2W | 9W | 12W |
|---|---|---|---|---|
| Test sample S. ceresiviae A-088 | good | good | good | good |
| Control sample Commerial baker's yeast | no good | no good | no good | no good |

1D = 1 day   W = weeks

Example 2

Saccharomyces cerevisiae var. ellipsoideus A-030 (FERM-P 6189) was used as the yeast and cultured in the following manner using a 30 litre jar fermentor:-

Seed culture

(1) Medium: Glucose (5 g/dl), urea (0.1 g/dl), yeast extract (1.0 g/dl) and potassium phosphate, monobasic (0.1 g/dl). pH 5.0

(2) Amount of the medium (vessel) in each step:-
First seed: 10 ml (50 ml test tube)
Second seed: 50 ml (500 ml Erlenmeyer flask)
Third seed: 300 ml (2 litre jar fermentor)

Inoculum:- one platinum loopful of yeast to the first medium.

(3) Culturing conditions:
30°C, with shaking (200 r.p.m.), 24 hours

Main culture

(1)  Vessel:  30 litre jar fermentor

(2)  Medium and conditions, as shown in Table 7.

TABLE 7

|  | Pre-fermentation | Main fermentation |
|---|---|---|
| Molasses (kg) | 1.5 (calculated as | 1.5 glucose) |
| Ammonium sulphate (g) | 129 | 45 |
| Urea (g) | 59 | 81 |
| Ammonium phosphate, monobasic (g) | 44 | 17 |
| Amount of liquor at the beginning of fermentation (1) | 10 | 10 |
| Amount of liquor after completion of fermentation (1) | 20 | 20 |
| Culturing time (h.) | 20 | 16 |
| Aeration (1/min.) | 25 | 25 |
| Shaking (r.p.m.) | 60 | 60 |
| Amount of yeast (g) | - | 900 (as yeast containing 67% water) |
| Method of adding sugar stream (150 g/l) | At intervals of 1 hour 500 mls | 625 mls |
| pH | 5.0 | 5.0 |

After completion of the fermentation, the yeast was dehydrated and pressed.  Samples of the frozen dough were prepared and used in the tests, the results of which are described hereinafter.

Table 8 indicates the ingredients of the bread samples.

- 12 -

TABLE 8

|  | Test sample | Control sample |
|---|---|---|
| Wheat flour | 1000 g(100%) | 1000 g(100%) |
| Sugar | 50 (5%) | 50 (5%) |
| Table salt | 20 (2%) | 20 (2%) |
| Shortening | 50 (5%) | 50 (5%) |
| Yeast | – | 20 (2%) |
| Yeast food | 0.5 (0.05%) | 0.5 (0.05%) |
| Water | 620 ml(62%) | 620 ml(62%) |
| Freeze-resistant yeast | 20(2%) | – |

The steps for preparing the bread samples were similar to those described in Example 1.

Table 9 indicates the specific volume and the preservability of bread samples prepared as described above.

TABLE 9

| Yeast | Preserved at -18°C for (weeks) | | | | | |
|---|---|---|---|---|---|---|
|  | 1D* | 2 | 4 | 6 | 9 | 12 |
| Test yeast S. cerevisiae var. ellipsoideus A-030 (FERM-P6189) | 5.4 | 5.4 | 5.4 | 5.4 | 5.4 | 5.3 |
| Control Commercial baker's yeast | 4.8 | 4.3 | 4.1 | 4.0 | 3.9 | 3.6 |

*1D = 1 day

Example 3

Saccharomyces chevalieri A-080 (FERM-P 6190) was used as the yeast and cultured, dehydrated and pressed in a similar manner to that described in Example 2 to prepare frozen doughs which may be used for making bread. Table 10 indicates the specific volume and preservability of bread samples made using the doughs of the present Example when compared with bread samples made using conventional commercial baker's yeast:-

## TABLE 10

Specific volume and preservability

| Yeast | Preserved at -18°C for (weeks) | | | | | |
|---|---|---|---|---|---|---|
| | 1D* | 2 | 4 | 6 | 9 | 12 |
| Test sample S. chevalieri A-080 (FERM-P6190) | 5.5 | 5.4 | 5.4 | 5.4 | 5.3 | 5.1 |
| Control sample Commercial baker's yeast | 4.8 | 4.4 | 4.3 | 4.1 | 3.8 | 3.8 |

*1D = 1 day

Claims

1.    A freeze-resistant dough for the preparation of
bread and other farinaceous products, characterized in
that said dough comprises an alcohol-resistant yeast as
active ingredient.

2.    A dough as claimed in claim 1 wherein the yeast has
an alcohol-resistance of at least 4.0 measured by the
method of Inoue et al.

3.    A dough as claimed in claim 2 wherein the yeast has
an alcohol-resistance of at least 5.0.

4.    A dough as claimed in any one of the preceding claims
wherein the alcohol-resistant yeast is a yeast of the
genus Saccharomyces.

5.    A dough as claimed in claim 4 wherein the alcohol-
resistant yeast is selected from Saccharomyces cerevisiae
and Saccharomyces chevalieri.

6.    A dough as claimed in claim 5 wherein the alcohol-
resistant yeast is selected from Saccharomyces cerevisiae
A-088 (FERM-P No. 6191), Saccharomyces cerevisiae var.
ellipsoideus A-030 (FERM-P No. 6189) and Saccharomyces
cerevisiae A-080 (FERM-P No. 6190).

7.    A dough as claimed in claim 5 wherein the alcohol-
resistant yeast is selected from Saccharomyces cerevisiae
A-055, Saccharomyces cerevisiae A-077, Saccharomyces
cerevisiae A-090 and Saccharomyces cerevisiae A-109.

8.    A dough as claimed in any one of the preceding
claims in frozen form.

9.    A process for making bread or other farinaceous
product which comprises using a dough as claimed in
any one of the preceding claims.